# EUROPEAN PATENT APPLICATION

(11) **EP 1 160 010 A2**
(43) Date of publication of application: **05.12.2001**
(21) Application number: 01304628.9
(22) Date of filing: 25.05.2001
(51) Int. Cl.: B01J 20/18, B01D 53/28

(54) **Humidity adsorbent agent and humidity adsorbent element using thereof**

(30) Priority: 25.05.2000 JP 2000154700
(71) Applicant: NICHIAS CORPORATION, Tokyo (JP)
(72) Inventor: Daikaku, Hiroki, Chiba-shi, Chiba-ken (JP); Kobayashi, Takeya, Tokyo (JP); Yamazaki, Teruji, Kawasaki-shi, Kanagawa-ken (JP)
(74) Representative: Allard, Susan Joyce

(57) **Abstract**

A humidity adsorbent agent comprising a hydrophilic zeolite based on an alumina-silicate, wherein a proportion of sodium in the zeolite is replaced by one or more lanthanide elements. The alumina-silicate may be expressed as having the general formula aMₓO_{Y}·bNa₂O·cAl₂O₃·dSiO₂·eH₂O, where M is selected from one or more of the lanthanide elements

## Description

The present invention relates to a humidity adsorbent agent and the use thereof in a humidity adsorbent element.

As a humidity adsorbent element for use in, for example, a regeneration type dehumidifier or heat exchanger, it is known to use a humidity adsorbent agent such as, for example, silica gel or a zeolite. The humidity adsorbent agent is typically supported on the surface of a carrier, which may comprise, for example, a honeycomb monolith formed from, for example, an inorganic fiber. Humidity adsorbent elements based on silica gel are popular owing to their high humidity adsorbing characteristics, ease of desorption and cheapness.

The humidity adsorbent element is typically supported on a surface of honeycomb rotor, which may be formed from an inorganic fiber.

The peripheral part of the honeycomb rotor is typically divided into an adsorbing zone for adsorbing humidity, a desorbing zone for desorbing the adsorbed humidity (and recovering an adsorbing capability of the honeycomb rotor), and a cooling zone for quenching the honeycomb rotor heated by the desorbing zone.

By rotating the honeycomb rotor, the adsorbing zone, the desorbing zone and the cooling zone are circulated in turn. As a consequence, cycles of adsorbing humidity (in normal temperature) and desorbing (using heat) are performed alternatively and repeatedly.

The desorbing process may be performed by passing heated air over the honeycomb rotor.

The temperature of the hot air necessary to achieve desorbtion depends on the amount of adsorbed humidity on the honeycomb rotor and the necessary energy (desorbing energy) to desorb humidity from the honeycomb rotor.

The desorbing energy may be expressed as the product of desorbing temperature and air volume. Accordingly, for a constant humidity, if the desorbing energy is low, then the desorbing temperature and air volume are low.

As will be appreciated, the desorbtion temperature is limited at least to an extent by the type of heater or heat exchanger being used and the availability of suitable power.

Zeolite is commonly used as a humidity adsorbent agent, for example a desiccant agent. In particular, hydrophilic zeolite has a higher adsorbing humidity than silica gel. However, the temperature of desorbtion for hydrophilic zeolite is relatively high (typically 180-200°C) owing to its high heat of vaporization. As a consequence, zeolite is not suitable for all applications.

Silica gel exhibits a lower desorbing temperature (typically 80-150°C) than zeolite. However, when the humidity is relatively low and the temperature of the air supplied to the honeycomb rotor is relatively high, silica gel does not function particularly well with respect to adsorbing humidity.

The present invention aims to address at least some of the problems associated with the prior art. In particular, one aim of the present invention is to provide a humidity adsorbent agent which exhibits at least some of the characteristics of hydrophilic zeolite and silica gel.

According to the first aspect of the present invention, for achieving the above-mentioned objects, inventors recognized that alumino-silicates replacing a part of sodium in a hydrophilic zeolite to lanthanides are provided prefer humidity adsorbing agent, and the present invention performed in basis of the recognition.

The alumino-silicates used the present invention will be described below.

In general, a crystalline alumino-silicate(s) expressed in xM_{2/n} Al₂O₃ySiO₂ (M is a metal having n value) by differencing of x and y differs a tunnel structure of the crystalline structure, and alumino-silicates are many kind. In these alumino-silicates, the present invention can be used an alumino-silicate structure each of A type zeoite (Na₂O · Al₂O₃ · 2 SiO₂ · 4.5H₂O), X type zeolite (Na₂O · Al₂O₃ · 2 .5SiO₂ · 3H₂O) and Y type zeolite (Na₂O · Al₂O₃ · 4.8SiO₂ · 8.9H₂O) is replaced a part of Na to any of Lanthanides of La mainly. Used materials of the present invention is expressed in formula of aMₓO_{y} · bNa₂O · cAl₂O₃ · d SiO₂ · eH₂O (M is a Lanthanide).

In the present invention, a Lanthanide(s) which is replaced a part of Na in the zeolite to Lanthanide(s) element is selected any one of Lanthanides or, a plural elements of selected any of Lanthanide.

In the present invention, there is an acknowledge about that the alumino-silicate which structure is replaced to Lanthanide(s) of La mainly, has a low heat of adsorbing and a low heat of vaporization, and an effective adsorbing volume of the alumino-silicate is large for heat of adsorbing and heat of vaporization nearly equal.

These acknowledge means that a humidity adsorbing agent according to the present invention has a high capability of humidity adsorbent from low temperature to high temperature same as hitherto hydrophilic zeolite, and acts dehumidification performance having a desorbing temperature same as silica gel.

That is, according to the first aspect of the present invention, for achieving the above-mentioned objects, there is a substance of being used an alumino-silicate which is replaced a part of sodium to Lanthanide(s) in a hydrophilic zeolite.

According to the second aspect of the present invention, in the first aspect of the present invention, there is a substance that the humidity adsorbing agent is an alumino-silicate which is expressed in formula of aMₓO_{y} · bNa₂O · cAl₂O₃ · dSiO₂ · eH₂O (M is a Lanthanide), the Lanthanide is selected any one of Lanthanides or, a plural elements of selected any of Lanthanide.

According to the third aspect of the present invention, in the second aspect of the present invention, there is a substance that in the humidity adsorbing agent, aMₓO_{y} is selected one or more in La₂O₃, Nd₂O₃, CeO₃ and Pr₆O₁₁, Na₂O is a ratio of equal to or less than 5 weight %, Al₂O₃ is a ratio of 10 to 35 weight % as the cAl₂O₃ and SiO₂ is a ratio of 20 to 80 weight % as the d SiO₂ .

According to the fourth aspect of the present invention, in the first to third aspects of the present invention, there is a substance that a humidity adsorbing element is supported the humidity adsorbing agent on a carrier.

It is preferred that for an object capability is performed, aMₓO_{y} contains equal to or more than 1 weight %. In aMₓO_{y}, there is a most preferably that La₂O₃ used, when more effectively is obtained, there is more preferred that La₂O₃ is contained a ratio of 4 to 10 weight %.

Upper limit of La₂O₃, CeO₃ and Pr₆O₁₁ is in generally, 10 weight % in La₂O₃, about 5 weight % in Nd₂O₃, CeO₃ and Pr₆O₁₁, respectively. In the present invention, it is not limited these contains, more ratio contains may be used.

Performing a good dehumidify capability of the humidity adsorbent element of the present invention, it is preferred that necessity of a capacity of honeycomb rotor is equal to or less than 250 g/litter, more preferably, 200 g/litter.

In a preferred embodiment of a present invention, inorganic binder was added in an adsorbing agent containing of 6 weight (wt) % of La₂O₃, 2 wt % of Nd₂O₃, 2 wt % of CeO₃, 2 wt % of Pr₆O₁₁, 27 wt % of Al₂O₃ and 58 wt % of SiO₂ and was slurry likewise, then a surface of honeycomb rotor was impregnated in the slurry and dried. A humidity adsorbing element was constituted.

### Example

Example of the present invention with comparative examples will be described below.

### Example 1

As a material which was added a minority of organic fiber in a major of alumina silica fiber as raw material, paper was made having a thickness of 0.2 mm, a density of 0.25 g/cm³. Obtained raw material paper was used and corrugate-manufactured as honeycomb likewise 3.3 mm in each length and 1.9 mm in each width and rolled, then obtained fabrics had a cylindrical honeycomb structure (400 mm in diameter, 400 mm in length). The honeycomb structure was impregnated in a slurry likewise adding inorganic binder in the humidity adsorbent agent comprised of La containing alumino-silicate composition of 6 weight (wt) % of La₂O₃, 3 wt % of Na₂O, 2 wt % of Nd₂O_{3,} 2 wt % of CeO₃, 2 wt % of Pr₆O₁₁, 27 wt % of Al₂O₃ and 58 wt % of SiO₂, and dried then removed in organic part of the honeycomb structure by baking. A humidity adsorbing element of honeycomb likewise was obtained.

### Comparative example 1

Using a same manufacturing method of example 1, a humidity adsorbent element of a cylindrical honeycomb structure (400 mm in diameter, 400 mm in length) supported A type zeolite was obtained.

### Comparative example 2

E glass fiber paper (30 g/m² in basic weight of square meter, 0.2 mm in thickness) was impregnated in a slurry likewise. Obtained raw material paper was used and corrugate-manufactured as honeycomb likewise 3.3 mm in each upper peak pitch and 1.9 mm in height, then obtained fabrics had a cylindrical honeycomb structure (400 mm in diameter, 400 mm in length). After the honeycomb structure was impregnated in sodium silicate solution, silica gel on the honeycomb surface was synthesized by chemical reaction. Then it was washed, dried, and was removed organic in honeycomb humidity adsorbent element and a humidity adsorbent element supported silica gel of honeycomb likewise was obtained.

The honeycomb likewise humidity adsorbent element manufactured by using method same of example 1, comparative examples 1 to 2, was set in a rotary regeneration type dehumidifier. Obtained result is shown by Tables 1 to 2.

Table 1 shows dew point of processing outlet is compared in example 1 and comparative examples 1 to 2. Table 2 shows regenerating temperature which the same dew point of processing outlet is obtained in example 1 and comparative example 1 compares.

**Table 1**

| | | | |
|---|---|---|---|
| inlet temperature | | 10 °C | 20 °C |
| inlet absolute moisture | | 5 g/kg | 5g/kg |
| outlet dew point | Example 1 | -56 °CDP | -45 °CDP |
| | Comp. example 1 | -43 °CDP | -35 °CDP |
| | Comp. example 2 | -38 °CDP | -28 °CDP |

- Testing condition:: passing wind speed 2 m/s;
regenerating temperature 140 °C;
°CDP: dew point (dew point by °C)

**Table 2**

| | Example 1 | Comp. example 1 |
|---|---|---|
| regeneration temperature | 140 °C | 160 °C |
| outlet dew point | -53 °C DP | -53 °CDP |

- Testing condition:: passing wind speed 2 m/s;
processing inlet temperature 10 °C;
processing inlet absolute moisture 5g/kg

It is clearly shown by Tables 1 to 2, by using a humidity adsorbent element supported a humidity adsorbent agent according to the present invention, a humidity adsorbent capability is larger as same as in conventional a humidity adsorbent agent using silica gel. To use of dehumidification used hydrophilic zeolite under low humidity area, upgrade performance of dehumidification humidification and lowering of desorbing energy can be performed.

In addition, desorbing temperature for necessary gain of humidity adsorbing capacity (performance of dehumidification, humidification) same as humidity adsorbent agent using silica gel can be small. These effects increases by maldistributing a humidity adsorbent agent(s) on carrier surface supported.

Furthermore, low temperature area such as hydrophilic zeolite utilizes merely may use and usage method of waste heat is conceivable. These effects increases by maldistributing a humidity adsorbent agent(s) on carrier surface supported.

Thereinbefore, describing the present invention in detail, in accordance with the present invention, there is provided a humidity adsorbent agent having duplicating advantages of hydrophilic zeolite and silica gel, that is, there is provided a humidity adsorbent agent having a humidity adsorbent capability same as zeolite and desorbing temperature is the same of silica gel and there is provided a humidity adsorbing element using thereof.

## Claims

1. A humidity adsorbent agent which comprises or consists of a hydrophilic zeolite based on an alumina-silicate, wherein a proportion of sodium in the zeolite is replaced by one or more lanthanide elements.

2. A humidity adsorbent agent as claimed in claim 1, wherein the humidity adsorbing agent is or comprises an alumina-silicate having the general formula aMₓO_{y}·bNa₂O·cAl₂O₃·dSiO₂·eH₂O, where M is selected from one or more of the lanthanide elements.

3. A humidity adsorbent agent as claimed in claim 2, wherein M is selected from one or more of La, Nd, Ce and Pr.

4. A humidity adsorbent agent as claimed in claim 2 or claim 3, wherein MₓO_{y} is selected from one or more of La₂O₃, Nd₂O₃, CeO₃ and Pr₆O₁₁.

5. A humidity adsorbent agent as claimed in any one of claims 2 to 4, comprising at least 1 weight % MₓO_{y}.

6. A humidity adsorbent agent as claimed in claim 4, comprising up to 10 weight % La₂O₃.

7. A humidity adsorbent agent as claimed in claim 4 or claim 6, comprising up to 5 weight % each of one or more of Nd₂O₃, CeO₃ and Pr₆O₁₁.

8. A humidity adsorbent agent as claimed in any one of claims 2 to 7, comprising up to 5 weight % Na₂O, from 10 to 35 weight % Al₂O₃, and from 20 to 80 weight % SiO₂.

9. A humidity adsorbing element comprising a humidity adsorbing agent as defined in any one of claims 1 to 8 supported on a carrier, preferably a carrier in the shape of a honeycomb rotor.

10. A dehumidifier or a heat exchanger comprising a humidity adsorbing element as defined in claim 9.
